# FASCICULE DE BREVET EUROPEEN

(11) **EP 2 308 693 B1**
(45) Date de publication et mention de la délivrance du brevet: **05.12.2012**
(21) Numéro de dépôt: 10186409.8
(22) Date de dépôt: 04.10.2010
(51) Int. Cl.: B60C 7/10, B60C 7/22, C08K 3/22, C08K 5/18, C08L 21/00, C08L 23/16, C08K 5/23, C08J 9/10

(54) **Dispositif anti-crevaison pour ensemble monté non pneumatique de véhicule à deux roues, et cet ensemble monté l'incorporant**
Durchstichfestes Gerät für schlauchlose Anordnung in zweirädrigen Fahrzeug und Einbau desselben
Anti-puncture device for non-pneumatic assembly in a two-wheeled vehicle and an assembly fitted therewith

(30) Priorité: 06.10.2009 FR 0904762
(43) Date de publication de la demande: 13.04.2011
(73) Titulaire: Hutchinson, 75008 Paris (FR)
(72) Inventeur: Thenault, Yannick, 49460 MONTREUIL JUIGNE (FR); Riviere, Stéphane, 45700, PANNES (FR); Gassaud, Eric, 45200, AMILLY (FR)
(74) Mandataire: Bolinches, Michel Jean-Marie

(56) Documents cités:
- EP-A1- 0 089 914
- EP-A1- 1 676 722
- WO-A1-2004/022644
- FR-A1- 2 804 121
- GB-A- 2 087 902
- JP-A- 2005 075 956

## Description

La présente invention concerne un dispositif anti-crevaison pour un ensemble monté non pneumatique de véhicule à deux roues, en particulier pour une bicyclette, et un tel ensemble monté incorporant ce dispositif. L'invention s'applique à un ensemble monté sans pression de gonflage (i.e. sans gaz sous pression tel que de l'air), dont le bandage est soutenu en permanence par ce dispositif anti-crevaison.

De manière connue, les ensembles montés pour bicyclettes peuvent incorporer des moyens de mise sous pression de leur espace interne, que ce soit via des chambres à air prévues entre le pneumatique et la jante de roue (un tel ensemble monté est alors appelé « tubetype ») ou bien sans chambre à air via le montage étanche du pneumatique contre les rebords de jante (ensemble monté « tubeless »).

Un inconvénient de ces ensembles montés sous pression réside non seulement dans le gonflage régulier qu'ils requièrent pour pallier la fuite progressive du gaz de gonflage, mais encore dans le fait qu'ils peuvent être perforés par exemple par crevaison ou par vandalisme ce qui entraîne usuellement l'immobilisation du véhicule pour sa réparation.

Il est également connu d'utiliser des bandages non pneumatiques (i.e. ne requérant pas de mise sous pression de l'espace interne au bandage) qui forment une bande de roulement pour l'ensemble monté et qui sont soutenus par un appui élastomère autoporteur de type cellulaire à cellules fermées remplissant sensiblement tout l'espace compris entre le bandage et la jante. On peut par exemple citer le document EP-B1-1 772 292 pour la description d'un tel ensemble monté non pneumatique pour bicyclette, dans lequel l'appui de soutien est à base d'un élastomère polyuréthanne.

Un inconvénient majeur de ces ensembles montés non pneumatiques existants à appuis de soutien cellulaires réside dans leur résistance au roulement relativement élevée et/ou dans la tenue de route laissant à désirer qu'ils confèrent à la bicyclette qui en est équipée (notamment sur route mouillée). D'autres inconvénients de ces ensembles montés non pneumatiques résident dans leur masse relativement élevée et/ou dans leur durée de vie limitée.

Un but de la présente invention est de proposer un dispositif anti-crevaison pour ensemble monté non pneumatique de véhicule à deux roues, en particulier de bicyclette, qui permette de remédier à ces inconvénients, ce dispositif comprenant un appui de soutien annulaire qui est destiné à être monté entre une jante et un bandage de cet ensemble monté de sorte à soutenir en permanence ce bandage et qui est constitué d'une composition de caoutchouc réticulée de type cellulaire à cellules fermées, cette composition étant à base d'au moins un élastomère et comprenant une charge inorganique renforçante et au moins un agent gonflant organique.

A cet effet, un dispositif selon l'invention est tel que ladite composition comprend au moins un oxyde de zinc de grade actif apte à activer la décomposition par voie thermique dudit agent gonflant, de sorte à stabiliser l'expansion de l'appui en lui conférant une densité moyenne minimisée.

On notera que la Demanderesse a découvert que cet oxyde de zinc spécifiquement de grade actif (qui se différencie des oxydes de zinc communément utilisés en caoutchouterie pour activer la réticulation de l'élastomère, par une valeur de surface spécifique BET beaucoup plus élevée avec une tolérance étroite de part et d'autre de cette valeur, comme expliqué ci-après) a pour effet de modifier la température de décomposition par voie thermique de l'agent gonflant qui est à l'origine de la libération d'un gaz lors du chauffage réalisant l'expansion de la composition, ce qui permet d'une manière surprenante d'optimiser cette expansion pour l'obtention d'une densité moyenne de celle-ci réduite à l'état expansé.

Plus précisément, ledit appui peut ainsi avantageusement présenter une masse volumique moyenne comprise entre 400 et 800 kg/m³ et de préférence comprise entre 500 et 700 kg/m³, qui est particulièrement bien adaptée pour les ensembles montés de bicyclettes. Encore plus avantageusement, cet appui peut présenter un gradient de densité entre une zone centrale d'appui de densité maximale et une zone périphérique d'appui de densité minimale.

On obtient ainsi des performances dynamiques améliorées de l'appui de soutien réticulé et expansé avec notamment une résistance au roulement minimisée pendant la durée d'utilisation de l'appui. De plus, cette durée de vie de l'appui est augmentée par rapport à celle des appuis cellulaires connus en polyuréthanne, tout comme les caractéristiques de confort et de tenue de route conférées par cet appui au véhicule.

Avantageusement, ledit au moins un élastomère utilisé dans un appui selon l'invention est choisi dans le groupe constitué par les copolymères éthylène-propylène (EPM) et les élastomères diéniques. Encore plus avantageusement, ledit au moins un élastomère peut être choisi dans le groupe constitué par les copolymères éthylène-propylène (EPM), les terpolymères éthylène-propylène-diène (EPDM), le caoutchouc naturel (NR), les polyisoprènes (IR), les caoutchoucs nitriles (NBR), les polybutadiènes (BR) et les copolymère styrène-butadiène (SBR).

De préférence, ladite composition est à base d'une matrice élastomère qui est majoritairement ou, à titre encore plus préférentiel, exclusivement constituée d'un élastomère EPDM, lequel présente de préférence un taux d'unités issues de l'éthylène compris entre 55 et 65 % et un taux d'unités issues de l'éthylidène norbornène (ENB) compris entre 5 et 15 %.

En variante, il est envisageable d'utiliser un coupage d'un tel EPDM avec un autre élastomère également de nature apolaire et présentant un coefficient de solubilité proche de celui de l'EPDM utilisé, comme par exemple un élastomère diénique de type caoutchouc naturel (NR), polyisoprène (IR), polybutadiène (BR), copolymère styrène-butadiène (SBR), copolymère isoprène-isobutylène (IIR, également appelé caoutchouc butyle), pourvu que la matrice élastomère de la composition soit à base de cet EPDM

(par « à base », on entend ici majoritairement constituée, i.e. selon une fraction massique supérieure à 50 % et de préférence supérieure à 75 %).

Par « charge inorganique renforçante », on entend dans la présente description un ensemble de charges claires autres que du noir de carbone, telles que de la craie et du kaolin qui sont de préférence utilisés dans le composition de l'invention. Avantageusement, la fraction massique de l'ensemble de ces charges claires dans la composition peut être comprise entre 25 et 35 %.

On notera que la composition de l'invention peut en outre inclure du noir de carbone en plus de cette charge inorganique renforçante, avantageusement selon une fraction massique comprise entre 5 et 9 %. Ce noir de carbone que l'on peut ainsi optionnellement utiliser en combinaison avec les charges claires précitées, telles que la craie et le kaolin, peut permettre d'améliorer, d'une part, la portance (ou résistance à la charge en roulage) de l'appui et, d'autre part, sa résistance à la rupture. On peut néanmoins considérer que l'absence de noir de carbone pourrait améliorer la déformation rémanente à la compression de l'appui, ce qui signifie qu'en fonction du compromis de performances souhaité, il est possible d'ajuster dans une certaine mesure la quantité de noir de carbone dans la composition.

De préférence, ledit oxyde de zinc de grade actif présente une surface spécifique BET égale ou supérieure à 30 m²/g et une tolérance inférieure à ± 5 m²/g, cette surface spécifique étant de préférence comprise entre 40 m²/g et 45 m²/g avec une tolérance inférieure à ± 3 m²/g. Cette surface BET est mesurée classiquement selon la méthode de Brunauer-Emmett-Teller décrite dans « The Journal of the American Chemical Society » Vol. 60, page 309, février 1938 et correspondant à la norme AFNOR-NFT-45007 de novembre 1987.

En effet, la Demanderesse a établi que c'est cette tolérance extrêmement réduite vis-à-vis de la surface spécifique de cet oxyde de zinc de grade actif qui le rend apte à exercer la fonction précitée d'activation et de stabilisation de l'expansion.

Egalement à titre préférentiel, cet oxyde de zinc de grade actif est présent dans la composition selon une fraction massique comprise entre 1 et 5 %.

Avantageusement, ledit au moins un agent gonflant peut être un azodicarbonamide présent dans ladite composition selon une fraction massique comprise entre 2 % et 6 %.

Egalement avantageusement, ladite composition peut comprendre en outre des fibres textiles de renforcement, de préférence à base d'un polyamide, ces fibres étant présentes dans ladite composition selon une fraction massique comprise entre 0,5 % et 1,5 %.

On notera que ces fibres ont un rôle d'agent structurel qui renforce les caractéristiques mécaniques de l'appui pour en optimiser la durabilité.

Selon une autre caractéristique de l'invention, ladite composition contient, outre ladite matrice élastomère, le(s)dit(s) agent(s) gonflant(s), ladite charge renforçante inorganique et éventuellement ladite charge renforçante organique et/ou lesdites fibres, et ledit oxyde de zinc actif :
- un système de réticulation qui est de préférence un système de vulcanisation au soufre comprenant au moins un accélérateur de vulcanisation, la fraction massique d'un tel système de vulcanisation dans la composition étant avantageusement comprise entre 1 et 3 %, et
- tout ou partie des autres additifs habituellement utilisés dans les mélanges de caoutchouc, comme par exemple des huiles d'extension, des plastifiants, pigments, antioxydants, et agents de mise en oeuvre.

On notera que ledit oxyde de zinc de grade actif utilisé à titre d'activateur de la décomposition de l'agent gonflant permet en outre d'activer la réticulation de l'élastomère utilisé.

Selon une autre caractéristique de l'invention, le dispositif anti-crevaison peut être exclusivement constitué dudit appui de soutien élastomère, lequel présente une forme sensiblement toroïdale pleine ou évidée circonférentiellement.

Un ensemble monté non pneumatique selon l'invention pour véhicule à deux roues, en particulier pour une bicyclette, comporte une jante de roue, un bandage de type élastomère compact (i.e. non cellulaire) comprenant une bande de roulement et deux talons montés contre deux rebords de la jante, et un dispositif anti-crevaison tel que défini ci-dessus qui est monté entre cette jante et ce bandage, cet ensemble monté étant dépourvu de tout moyen de mise sous pression de son espace interne.

Selon une autre caractéristique de l'invention, l'appui peut être monté autour de la jante et au contact du bandage en occupant sensiblement tout l'espace interne à ce dernier, l'appui épousant optionnellement le profil du fond de jante axialement compris entre ces rebords de jante.

On notera que l'appui de l'invention peut optionnellement présenter un aspect de surface relativement rugueux ou granuleux, de sorte que le coefficient de frottement entre l'appui et le bandage qu'il soutient soit suffisant pour éviter le déplacement de l'appui à l'intérieur du bandage et contribuer ainsi à pérenniser la performance dynamique de l'ensemble monté.

Un ensemble monté selon l'invention présente notamment les avantages suivants, en plus de ceux cités plus haut :
- une protection efficace contre les risques de crevaison du bandage par perforation, choc-pincement en roulage ou vandalisme, par exemple,
- une portance et un roulage du véhicule assurés dans des conditions satisfaisantes, avec un poids qui n'est que peu augmenté par rapport aux ensembles montés pneumatiques actuels qui utilisent un gaz sous pression et qui est réduit par rapport aux ensembles montés non pneumatiques existants,
- un maintien dans la durée de la résistance au roulement à un niveau relativement faible,
- des qualités de confort, de tenue de route et de durée de vie satisfaisantes pour l'utilisateur, et
- un montage très simple de l'appui à l'intérieur du bandage, sans outillage particulier autre que les « démonte-pneus » usuels.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec le dessin joint, dans lequel :
la figure 1 est une vue schématique en demi-section axiale d'un ensemble monté non pneumatique pour bicyclette selon un premier exemple de l'invention, dans lequel l'appui de soutien n'épouse pas le fond de jante,
la figure 2 est une vue schématique en demi-section axiale d'un ensemble monté non pneumatique pour bicyclette selon un deuxième exemple de l'invention, dans lequel l'appui épouse ce fond de jante, et
la figure 3 est une vue en demi-section axiale d'un ensemble monté non pneumatique pour bicyclette selon un troisième exemple de l'invention correspondant à une variante de la figure 1.

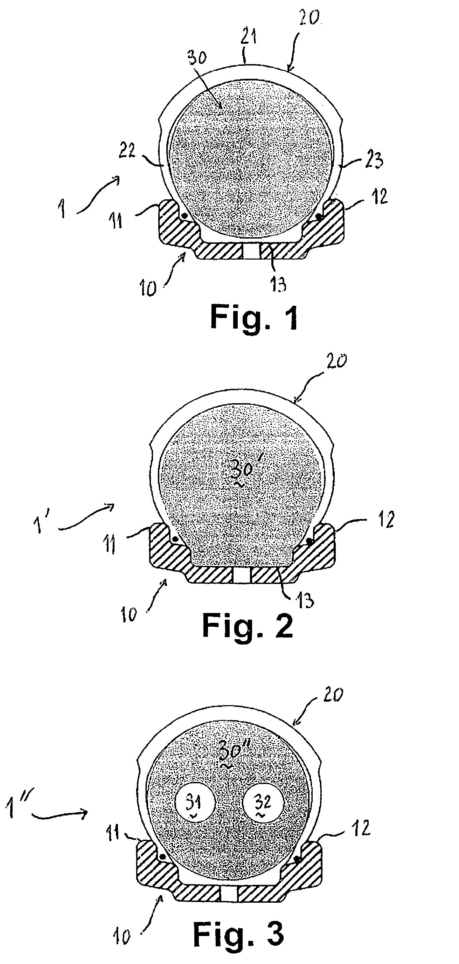

L'ensemble monté 1 de la figure 1 comporte :
- une jante de roue 10 présentant deux sièges de jante qui se terminent par deux rebords 11 et 12 de celle-ci et qui délimitent axialement entre eux un fond de jante 13,
- un bandage 20 à base d'au moins un élastomère compact comprenant une bande de roulement 21 et deux flancs 22 et 23 se terminant respectivement par deux talons renforcés par deux tringles, lesquels talons sont montés sur ces deux sièges (les diverses nappes ou armatures renforçant ce bandage 20 ne sont pas représentées), et
- un appui anti-crevaison 30 réticulé et expansé monté entre la jante 10 et le bandage 20 en soutenant ce dernier, l'appui 30 présentant une section transversale sensiblement circulaire (après extrusion sous forme d'un « jonc » rectiligne, suivie de sa réticulation/ expansion en continu puis d'un aboutement de ses extrémités pour lui conférer une géométrie annulaire).

Selon l'invention, cet appui 30 est autoporteur en ce sens qu'il suffit à assurer la portance en roulage du bandage 20 sans utilisation de gaz de gonflage de la cavité délimitée par ce dernier autour de la jante 10.

L'appui anti-crevaison 30' de l'ensemble monté 1' de la figure 2 se différencie uniquement de celui de la figure 1, en ce qu'il présente une section transversale tronquée pour épouser le profil du fond de jante 13 en s'y calant entre les sièges de jante. Dans l'exemple de la figure 2, l'appui 30' présente un tronçon de calage de section axiale globalement rectangulaire.

L'appui anti-crevaison 30" de l'ensemble monté 1" de la figure 3 se différencie uniquement de celui de la figure 1, en ce qu'il présente deux canaux circonférentiels 31 et 32 parallèles entre eux de même section axiale circulaire et, dans cet exemple, ménagés tous deux à une même hauteur radiale par rapport à la jante 10, axialement de part et d'autre de l'axe central de symétrie de l'appui 30" sensiblement torique. Ces canaux 31 et 32 sont notamment conçus pour alléger l'ensemble monté, étant précisé que l'on pourrait en variante en prévoir un nombre différent (un seul évidement central, par exemple) avec un positionnement différent au sein de l'appui et/ou selon des sections axiales non circulaires.

On va à présent décrire un exemple de fabrication d'un appui 30 selon l'invention, donné à titre illustratif en référence à celui de la figure 1.

Dans une première étape de travail thermo-mécanique, on a procédé à un malaxage d'une composition de caoutchouc répondant à la formulation suivante (les quantités sont exprimées en fractions massiques) :
- 30 % d'un élastomère EPDM avec 58 % d'unités issues de l'éthylène, 33 % d'unités issues du propylène et 9 % d'unités issues de l'éthylidène norbornène (ENB) ;
- 7 % de noir de carbone ;
- 29 % d'une charge inorganique renforçante comprenant un mélange de craie et de kaolin ;
- 3 % de ZnO de grade actif sous forme de poudre de surface spécifique BET égale à 42,5 ± 2,5 m²/g ;
- 15 % d'une huile paraffinique ;
- 4 % d'un agent gonflant constitué d'azodicarbonamide ;
- 6 % d'un polymère thermoplastique de type polyoléfine ;
- 3 % d'agents de mise en oeuvre et d'additifs, comprenant du polyéthylène glycol, de l'acide stéarique et de l'oxyde de calcium ;
- 2 % d'un système de réticulation au soufre ; et
- 1 % de fibres d'un polyamide à titre d'agent structurel.

Dans une seconde étape de façonnage, on a procédé à une extrusion de la composition de caoutchouc obtenue au terme de la première étape pour l'obtention d'une ébauche d'appui réticulable et expansible, sous forme d'un « jonc » rectiligne extrudé présentant par exemple une section transversale globalement torique.

Suite à une troisième étape de réticulation/ expansion mise en oeuvre en continu au contact d'air chaud dans une étuve, on a obtenu un extrudat réticulé et expansé que l'on a soumis à un refroidissement puis découpé en tronçons de longueur correspondant à la circonférence de la jante 10.

On a finalement abouté les deux extrémités de chaque tronçon entre elles pour monter chaque appui 30 ainsi obtenu à l'intérieur du bandage 20 et autour de la jante 10. Chaque appui 30 présentait dans cet exemple un diamètre extérieur d'environ 33 mm, et une masse volumique moyenne de seulement 600 kg/m³.

## Revendications

1. Dispositif anti-crevaison (30, 30', 30") pour ensemble monté non pneumatique (1, 1', 1") de véhicule à deux roues, en particulier de bicyclette, ce dispositif comprenant un appui de soutien annulaire (30, 30', 30") qui est destiné à être monté entre une jante (10) et un bandage (20) de cet ensemble monté de sorte à soutenir en permanence ce bandage et qui est constitué d'une composition de caoutchouc réticulée de type cellulaire à cellules fermées, cette composition étant à base d'au moins un élastomère et comprenant une charge inorganique renforçante et au moins un agent gonflant organique, **caractérisé en ce que** ladite composition comprend au moins un oxyde de zinc de grade actif apte à activer la décomposition par voie thermique dudit agent gonflant de sorte à stabiliser l'expansion de l'appui en lui conférant une densité moyenne minimisée.

2. Dispositif anti-crevaison (30, 30', 30") selon la revendication 1, **caractérisé en ce que** ledit appui de soutien (30, 30', 30") présente une masse volumique moyenne comprise entre 400 kg/m³ et 800 kg/m³.

3. Dispositif anti-crevaison (30, 30', 30") selon la revendication 1 ou 2, **caractérisé en ce que** ledit appui de soutien (30, 30', 30") présente un gradient de densité entre une zone centrale d'appui de densité maximale et une zone périphérique d'appui de densité minimale.

4. Dispositif anti-crevaison (30, 30', 30") selon une des revendications précédentes, **caractérisé en ce que** ledit oxyde de zinc de grade actif présente une surface spécifique BET égale ou supérieure à 30 m²/g et une tolérance inférieure à ± 5 m²/g, cette surface spécifique étant de préférence comprise entre 40 m²/g et 45 m²/g avec une tolérance inférieure à ± 3 m²/g.

5. Dispositif anti-crevaison (30, 30', 30") selon une des revendications précédentes, **caractérisé en ce que** ledit oxyde de zinc de grade actif est présent dans ladite composition selon une fraction massique comprise entre 1 % et 5 %.

6. Dispositif anti-crevaison (30, 30', 30") selon une des revendications précédentes, **caractérisé en ce que** ladite charge inorganique renforçante comprend de la craie et du kaolin, selon une fraction massique totale dans ladite composition comprise entre 25 % et 35 %.

7. Dispositif anti-crevaison (30, 30', 30") selon une des revendications précédentes, **caractérisé en ce que** ladite composition comprend en outre un système de réticulation au soufre, de préférence selon une fraction massique comprise entre 1 % et 3 %.

8. Dispositif anti-crevaison (30, 30', 30") selon une des revendications précédentes, **caractérisé en ce que** ledit au moins un élastomère est choisi dans le groupe constitué par les copolymères éthylène-propylène (EPM) et les élastomères diéniques.

9. Dispositif anti-crevaison (30, 30', 30") selon la revendication 8, **caractérisé en ce que** ledit au moins un élastomère est choisi dans le groupe constitué par les copolymères éthylène-propylène (EPM), les terpolymères éthylène-propylène-diène (EPDM), le caoutchouc naturel (NR), les polyisoprènes (IR), les caoutchoucs nitriles (NBR), les polybutadiènes (BR) et les copolymères styrène-butadiène (SBR).

10. Dispositif anti-crevaison (30, 30', 30") selon la revendication 9, **caractérisé en ce que** ladite composition est à base d'une matrice élastomère qui est majoritairement ou exclusivement constituée d'un élastomère EPDM, lequel présente de préférence un taux d'unités issues de l'éthylène compris entre 55 % et 65 % et un taux d'unités issues de l'éthylidène norbornène (ENB) compris entre 5 % et 15 %.

11. Dispositif anti-crevaison (30, 30', 30") selon une des revendications précédentes, **caractérisé en ce que** ladite composition comprend en outre des fibres textiles de renforcement structurel de préférence à base d'un polyamide, ces fibres étant présentes dans ladite composition selon une fraction massique comprise entre 0,5 % et 1,5 %.

12. Dispositif anti-crevaison (30, 30', 30") selon une des revendications précédentes, **caractérisé en ce qu'**il est constitué dudit appui de soutien élastomère (30, 30', 30"), lequel présente une forme sensiblement toroïdale pleine ou évidée circonférentiellement.

13. Ensemble monté non pneumatique (1, 1', 1") pour véhicule à deux roues, en particulier pour une bicyclette, comportant une jante de roue (10), un bandage (20) à de type élastomère compact comprenant une bande de roulement (21) et deux talons montés contre deux rebords (11 et 12) de la jante et un dispositif anti-crevaison (30, 30', 30") monté entre cette jante et ce bandage, cet ensemble monté étant dépourvu de tout moyen de mise sous pression de son espace interne, **caractérisé en ce que** ce dispositif est tel que défini à l'une des revendications précédentes.

14. Ensemble monté (1, 1', 1") selon la revendication 13, **caractérisé en ce que** ledit appui de soutien (30, 30', 30") est monté autour de la jante (10) et au contact du bandage (20) en occupant sensiblement tout l'espace interne à ce dernier, cet appui (30') épousant optionnellement le profil du fond (13) de la jante axialement compris entre lesdits rebords (11 et 12).

## Claims

1. Puncture-resistant device (30, 30', 30") for a non-pneumatic mounted assembly (1, 1', 1") of a two-wheeled vehicle, in particular of a bicycle, this device comprising an annular support (30, 30', 30") which is intended to be mounted between a rim (10) and a tire (20) of this mounted assemby so as to permanently support this tire and which is constituted of a crosslinked rubber composition of cellular type with closed cells, this composition being based on at least one elastomer and comprising a reinforcing inorganic filler and at least one organic blowing agent, **characterized in that** said composition comprises at least one active grade zinc oxide capable of activating the thermal decomposition of said blowing agent so as to stabilize the expansion of the support by giving it a minimized average density.

2. Puncture-resistant device (30, 30', 30") according to claim 1, **characterized in that** said support (30, 30', 30") has an average density between 400 kg/m³ and 800 kg/m³.

3. Puncture-resistant device (30, 30', 30") according to claim 1 or 2, **characterized in that** said support (30, 30', 30") has a density gradient between a central support zone of maximum density and a peripheral support zone of minimum density.

4. Puncture-resistant device (30, 30', 30") according to one of the preceding claims, **characterized in that** said zinc oxide of active grade has a BET specific surface area greater than or equal to 30 m²/g and a tolerance of less than ± 5 m²/g, this specific surface area preferably being between 40 m²/g and 45 m²/g with a tolerance of less than ± 3m²/g.

5. Puncture-resistant device (30, 30', 30") according to one of the preceding claims, **characterized in that** said active grade zinc oxide is present in said composition in a weight fraction between 1% and 5%.

6. Puncture-resistant device (30, 30', 30") according to one of the preceding claims, **characterized in that** said reinforcing inorganic filler comprises chalk and kaolin, in a total weight fraction in said composition between 25% and 35%.

7. Puncture-resistant device (30, 30', 30") according to one of the preceding claims, **characterized in that** said composition also comprises a sulfur crosslinking system, preferably in a weight fraction between 1% and 3%.

8. Puncture-resistant device (30, 30', 30") according to one of the preceding claims, **characterized in that** said at least one elastomer is chosen from the group consisting of ethylene-propylene copolymers (EPM) and diene elastomers.

9. Puncture-resistant device (30, 30', 30") according to claim 8, **characterized in that** said at least one elastomer is chosen from the group consisting of ethylene-propylene copolymers (EPM), ethylene-propylene-diene terpolymers (EPDM), natural rubber (NR), polyisoprenes (IR), nitrile rubbers (NBR), polybutadienes (BR) and styrene-butadiene copolymers (SBR).

10. Puncture-resistant device (30, 30', 30") according to claim 9, **characterized in that** said composition is based on an elastomer matrix which is predominantly or exclusively constituted of an EPDM elastomer, which preferably has a content of units derived from ethylene between 55% and 65% and a content of units derived from ethylidene norbornene (ENB) between 5% and 15%.

11. Puncture-resistant device (30, 30', 30") according to one of the preceding claims, **characterized in that** said composition also comprises structural reinforcement textile fibers preferably based on a polyamide, these fibers being present in said composition in a weight fraction between 0.5% and 1.5%.

12. Puncture-resistant device (30, 30', 30") according to one of the preceding claims, **characterized in that** it is constituted of said elastomeric support (30, 30', 30"), which has a substantially toroidal shape that is solid or hollowed out circumferentially.

13. Non-pneumatic mounted assembly (1, 1', 1") for a two-wheeled vehicle, in particular for a bicycle, comprising a wheel rim (10), a tire (20) of compact elastomer type comprising a tread (21) and two beads mounted against two flanges (11 and 12) of the rim and a puncture-resistant device (30, 30', 30") mounted between this rim and this tire, this mounted assembly being free of any means of pressurizing its internal space, **characterized in that** this device is as defined in one of the preceding claims.

14. Mounted assembly (1, 1', 1") according to claim 13, **characterized in that** said support (30, 30', 30") is mounted around the rim (10) and in contact with the tire (20) occupying substantially all the space within the latter, this support (30') optionally following the profile of the base (13) of the rim axially between said flanges (11 and 12).

## Patentansprüche

1. Durchstichfeste Vorrichtung (30, 30', 30") für eine schlauchlos montierte Anordnung (1, 1', 1 ") eines zweirädrigen Fahrzeugs, insbesondere eines Fahrrads, wobei diese Vorrichtung eine ringförmige Stützeinrichtung (30, 30', 30") aufweist, die dazu ausgebildet ist, zwischen einer Felge (10) und einem Reifen (20) dieser Anordnung so montiert zu werden, dass diese diesen Reifen ständig stützt, und die aus einer Zusammensetzung aus vernetztem Kautschuk vom Zellentyp mit geschlossenen Zellen gebildet ist, wobei diese Zusammensetzung auf mindestens einem Elastomer basiert und einen verstärkenden anorganischen Füllstoff und mindestens ein organisches Aufblas- bzw. Treibmittel aufweist, **dadurch gekennzeichnet, dass** diese Zusammensetzung mindestens ein aktives Zinkoxid aufweist, das dazu geeignet ist, die thermische Zersetzung des Aufblas- bzw. Treibmittels so zu aktivieren, dass die Ausdehnung der Stützeinrichtung stabilisiert wird, indem dieser eine minimierte mittlere Dichte verliehen wird.

2. Durchstichfeste Vorrichtung (30, 30', 30") nach Anspruch 1, **dadurch gekennzeichnet, dass** die Stützeinrichtung (30, 30', 30") eine mittlere Volumenmasse zwischen 400 kg/m³ und 800 kg/m³ aufweist.

3. Durchstichfeste Vorrichtung (30, 30', 30") nach Anspruch 1 oder 2, **dadurch gekennzeichnet, dass** die Stützeinrichtung (30, 30', 30") einen Dichtegradienten zwischen einem mittleren Stützbereich mit maximaler Dichte und einem Randstützbereich mit minimaler Dichte aufweist.

4. Durchstichfeste Vorrichtung (30, 30', 30") nach einem der vorhergehenden Ansprüche, **dadurch gekennzeichnet, dass** das aktive Zinkoxid eine spezifische Oberfläche nach BET von gleich oder größer als 30 m²/g und eine Toleranz von weniger als ± 5 m²/g aufweist, wobei diese spezifische Oberfläche vorzugsweise zwischen 40 m²/g und 45 m²/g mit einer Toleranz von weniger als ± 3 m²/g ist.

5. Durchstichfeste Vorrichtung (30, 30', 30") nach einem der vorhergehenden Ansprüche, **dadurch gekennzeichnet, dass** das aktive Zinkoxid in der Zusammensetzung mit einem massenbezogenen Anteil zwischen 1 % und 5 % vorhanden ist.

6. Durchstichfeste Vorrichtung (30, 30', 30") nach einem der vorhergehenden Ansprüche, **dadurch gekennzeichnet, dass** der verstärkende anorganische Füllstoff Kreide und Kaolin mit einem massenbezogenen Gesamtanteil an dieser Zusammensetzung zwischen 25 % und 35 % aufweist.

7. Durchstichfeste Vorrichtung (30, 30', 30") nach einem der vorhergehenden Ansprüche, **dadurch gekennzeichnet, dass** die Zusammensetzung ferner ein Vernetzungssystem aus Schwefel aufweist, vorzugsweise mit einem massenbezogenen Anteil zwischen 1 % und 3 %.

8. Durchstichfeste Vorrichtung (30, 30', 30") nach einem der vorhergehenden Ansprüche, **dadurch gekennzeichnet, dass** das mindestens eine Elastomer ausgewählt ist aus einer Gruppe, die aus den Ethylen-Propylen-Copolymeren (EPM) und den Dien-Elastomeren gebildet ist.

9. Durchstichfeste Vorrichtung (30, 30', 30") nach Anspruch 8, **dadurch gekennzeichnet, dass** das mindestens eine Elastomer ausgewählt ist aus einer Gruppe, die aus den Ethylen-Propylen-Copolymeren (EPM), den Ethylen-Propylen-Dien-Terpolymeren (EPDM), dem natürlichen Kautschuk (NR), den Polyisoprenen (IR), den Nitrilkautschuken (NBR), den Polybutadienen (BR) und den Styren-Butadien-Copolymeren (SBR) gebildet ist.

10. Durchstichfeste Vorrichtung (30, 30', 30") nach Anspruch 9, **dadurch gekennzeichnet, dass** die Zusammensetzung auf einer Elastomer-Matrix basiert, die mehrheitlich oder ausschließlich aus einem EPDM-Elastomer gebildet ist, das vorzugsweise einen Gehalt von aus Ethylen entstammenden Einheiten zwischen 55 % und 65 % und einen Gehalt von aus Ethyliden-Norbornen (ENB) entstammenden Einheiten zwischen 5 % und 15 % aufweist.

11. Durchstichfeste Vorrichtung (30, 30', 30") nach einem der vorhergehenden Ansprüche, **dadurch gekennzeichnet, dass** die Zusammensetzung ferner Textilfasern zur strukturellen Verstärkung vorzugsweise auf der Grundlage eines Polyamides aufweist, wobei diese Fasern in der Zusammensetzung mit einem massenbezogenen Anteil zwischen 0,5 % und 1,5 % vorhanden sind.

12. Durchstichfeste Vorrichtung (30, 30', 30") nach einem der vorhergehenden Ansprüche, **dadurch gekennzeichnet, dass** diese aus der elastomeren Stützeinrichtung (30, 30', 30") gebildet ist, die eine im Wesentlichen toroidale Form, die massiv oder in Umfangsrichtung ausgehölt ist, aufweist.

13. Schlauchlos montierte Anordnung (1, 1', 1") für ein zweirädriges Fahrzeug, insbesondere für ein Fahrrad, mit einer Radfelge (10), einem Reifen (20) vom Typ eines kompakten Elastomers mit einer Lauffläche (21) und zwei Wülsten, die gegen zwei Ränder (11 und 12) der Felge montiert sind, und einer durchstichfesten Vorrichtung (30, 30', 30"), die zwischen dieser Felge und diesem Reifen montiert ist, wobei diese montierte Anordnung ohne jegliches Mittel zum Unter-Druck-Setzen seines inneren Raumes ist, **dadurch gekennzeichnet, dass** diese Vorrichtung derart ausgestaltet ist, wie es gemäß einem der vorhergehenden Ansprüche bestimmt ist.

14. Montierte Anordnung (1, 1', 1") nach Anspruch 13, **dadurch gekennzeichnet, dass** die Stützeinrichtung (30, 30', 30") um die Felge (10) herum und in Kontakt mit dem Reifen (20) montiert ist, wobei im Wesentlichen der gesamte innere Raum des Letzteren eingenommen wird, wobei sich diese Stützeinrichtung (30') optional an das Profil des Bodens (13) der Felge axial zwischen den Rändern (11 und 12) anschmiegt.
